# EUROPEAN PATENT APPLICATION

(11) **EP 3 316 009 A1**
(43) Date of publication of application: **02.05.2018**
(21) Application number: 17020116.4
(22) Date of filing: 28.03.2017
(51) Int. Cl.: G02B 6/02

(54) **OPTICAL FIBER FOR INDOOR APPLICATIONS**

(30) Priority: 26.10.2016 IN 201621036749
(71) Applicant: Sterlite Technologies Ltd, Maharashtra 431 136 (IN)
(72) Inventor: Pandey, Anand, 431136 Maharashtra (IN); Kumar, Sravan, 431136 Maharashtra (IN); Coppin, Phill, 431136 Maharashtra (IN); Sahoo, Kishore, 431136 Maharashtra (IN)
(74) Representative: Norris, Timothy Sweyn

(57) **Abstract**

Disclosed is an optical fiber (100). The optical fiber (100) a core region (105) defined by a region around a central longitudinal axis (125). In addition, the optical fiber (100) a cladding region (110). The cladding region (110) surrounds the core region (105). Moreover, the optical fiber (100) includes a first coating layer (115). The first coating layer (115) surrounds the cladding region (110). Further, the optical fiber (100) includes a second coating layer (120). The second coating layer (120) surrounds the first coating layer (115). The first coating layer (115) is formed from a material selected from a group of acrylates and polyimides. The first coating layer (115) has a first diameter in a range of 200 µm - 300 µm. The second coating layer (120) is formed of a polyimide material. The second coating layer (120) has a second diameter in a range of 300 µm - 400 µm.

## Description

### TECHNICAL FIELD

The present disclosure relates to the field of fiber optic transmission and more specifically, the present disclosure relates to an optical fiber for indoor applications.

### BACKGROUND

Optical fibers have played a crucial role in the field of telecommunications over the last few years. These optical fibers are utilized for many types of applications. One type of application in which the use of optical fibers has been widely exploited is fiber-to-the-home application. Typically, these optical fibers are coated with multiple coating layers. In addition, these optical fibers are coated to meet the growing demands for bandwidth and high performance. These multiple coating layers are a rather significant component that determines physical fiber optic characteristics such as bending, chemical resistance, and mechanical strength. For example, these multiple coating layers protect the optical fibers from mechanical damage and preserve the ability of the optical fibers to transmit signals.

In one of the prior art with patent number US7539383 B2, a buffered optical fiber is provided. The buffered optical fiber includes a primary coating layer and a secondary coating layer around a circumference of the buffered optical fiber. Also, the buffered optical fiber includes a tertiary coating layer around the circumference of the buffered optical fiber. Both the primary coating layer and the secondary coating layer are formed of UV cured acrylate material. Moreover, the diameter of the primary coating layer is 180 µm - 200 µm and the diameter of the secondary coating layer is 350 µm - 450 µm. However, the above mentioned prior art bear several drawbacks. The UV cured acrylate is a low modulus soft, cushioning material which is considered to be a suitable material for inner coating layer. The utilization of UV cured acrylate material for manufacturing the secondary coating of the optical fibers do not provide required strength and degrades the performance of the optical fibers. In addition, the cabling, buffering or jacketing of these optical fibers is done for providing enough strength. This increases the manufacturing cost as well as the installation cost.

In light of the above stated discussion, there exists a need for a cost effective optical fiber having required strength for indoor applications.

### SUMMARY

According to one embodiment, an optical fiber comprises a core region defined by a region around a central longitudinal axis of the optical fiber, a cladding region surrounding the core region, a first coating layer surrounding the cladding region and a second coating layer surrounding the first coating layer. The first coating layer is formed from a material selected from a group of acrylates and polyimides, the first coating layer has a first diameter in a range of 200 µm - 300 µm, the second coating layer is formed of a polyimide material, the second coating layer has a second diameter in a range of 300 µm - 400 µm and the range of diameter and type of material used for the first coating layer and the second coating layer provides strength greater than or equal to 5GPa to the optical fiber.

Embodiments of the present disclosure substantially eliminate or at least partially address the aforementioned problems in the prior art, and provides an optical fiber for indoor applications. The optical fiber has a small diameter. The optical fiber has strength greater than equal to 5 GPa. In addition, the optical fiber can be directly deployed for indoor applications without any need of cabling, buffering over the optical fiber and hence reduces cost of manufacturing. Moreover, the optical fiber has crush resistant properties suitable for an indoor staple installation and can withstand harsh environment.

Additional aspects, advantages, features and objects of the present disclosure would be made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:

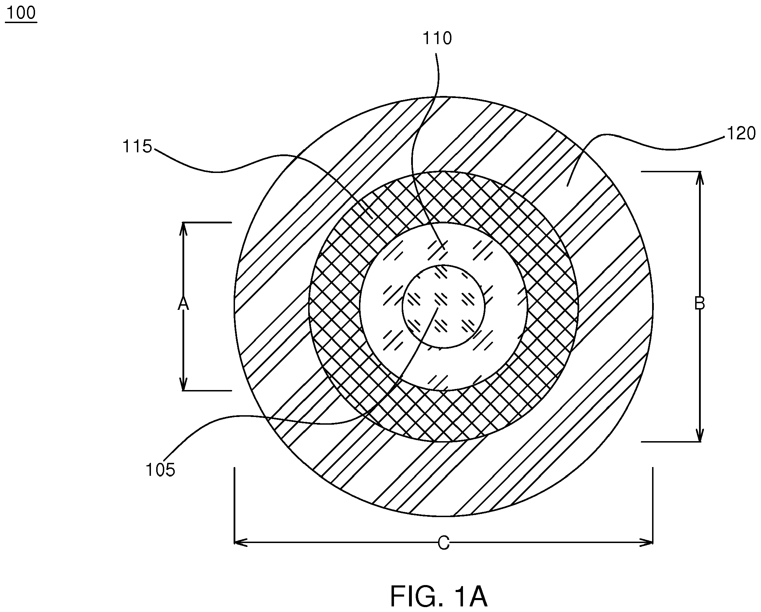

FIG. 1A illustrates a cross sectional view of an optical fiber, in accordance with an embodiment of the present disclosure; and

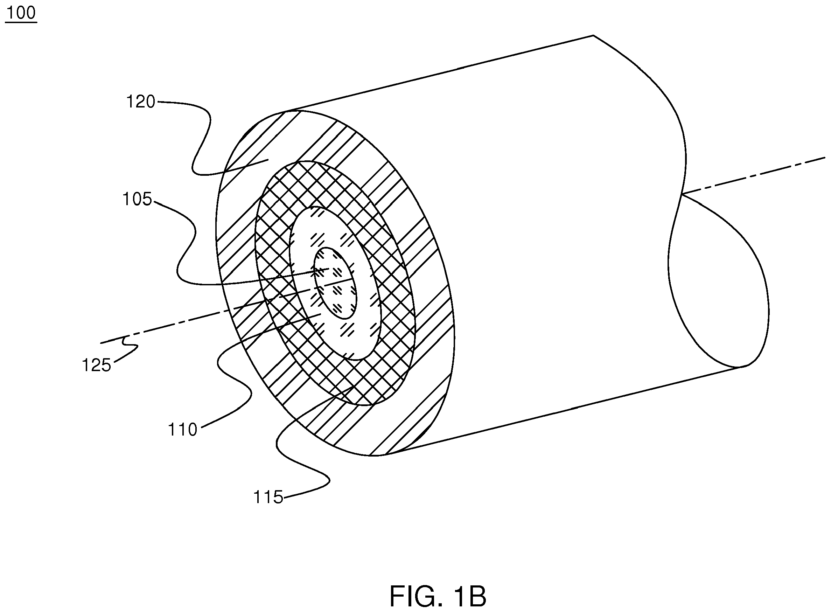

FIG. 1B illustrates a perspective view of the optical fiber of FIG. 1A, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

**FIG. 1A** illustrates a cross-sectional view of an optical fiber **100,** in accordance with an embodiment of the present disclosure. The optical fiber **100** is a fiber used for transmitting information as light pulses from one end to another. The optical fiber **100** is a thin strand of glass or plastic capable of transmitting optical signals. In addition, the optical fiber **100** allows transmission of information in the form of optical signals over long distances. In addition, the optical fiber **100** allows the transmission of information at high bandwidth. In general, a bandwidth is a measure of data-carrying capacity of the optical fiber **100.**

In an embodiment of the present disclosure, the optical fiber **100** is utilized for broadband communication applications. In another embodiment of the present disclosure, the optical fiber **100** may be utilized for other applications. Moreover, the optical fiber **100** complies with specific telecommunication standards. The telecommunication standards are defined by International Telecommunication Union-Telecommunication (hereinafter "ITU-T"). In an embodiment of the present disclosure, the optical fiber **100** is compliant with G.657 recommendation standard set by the ITU-T. Furthermore, the ITU-T G.657 recommendation describes a geometrical, mechanical and transmission attributes of a single mode optical fiber (the optical fiber **100**).

In an embodiment of the present disclosure, the optical fiber **100** is a bend insensitive optical fiber. In general, the bend insensitive optical fiber is defined as an optical fiber which shows low sensitivity to bending. Further, the ITU-T G.657 standard defines a plurality of characteristics associated with the optical fiber **100.** The plurality of characteristics include a mode field diameter, a cladding diameter, cable cut-off wavelength, macro bending loss, dispersion and refractive index. In addition, the plurality of characteristics includes core concentricity error, cladding non-circularity, attenuation coefficient and the like.

In general, the cladding non-circularity is defined as a percentage value obtained when the difference between minimum cladding radius and the maximum cladding radius associated with the optical fiber is divided by an average cladding radius of the optical fiber. In an embodiment of the present disclosure, the cladding non-circularity parameter associated with the optical fiber **100** is less than equal to 1 %. In general, the core concentricity error is defined as a distance between the center of a core and the center of a cladding. In an embodiment of the present disclosure, the core concentricity error associated with the optical fiber is less than equal to 0.5 µm. Furthermore, the telecommunication standards are defined by International Electrotechnical Commission (hereinafter "IEC"). In an embodiment of the present disclosure, the optical fiber **100** is compliant with IEC 60794-2 standard.

Going further, the optical fiber **100** is manufactured by adopting a plurality of manufacturing techniques. In general, the manufacturing of optical fibers has two major stages. The first stage involves the manufacturing of optical fiber preforms and the second stage involves drawing the optical fibers from the optical fiber preforms. In general, the quality of optical fibers is determined during the manufacturing of the optical fiber preforms. So, a lot of attention is paid towards the manufacturing the optical fiber preforms. These optical fiber preforms include an inner glass core surrounded by a glass cladding having a lower index of refraction. Also, these preforms are manufactured as per the requirements related to a specific refractive index profile, a core diameter, a cladding diameter and the like. The plurality of manufacturing techniques adopted for manufacturing the optical fiber **100** includes but may not be limited to modified chemical vapor deposition, outside vapor deposition, vapor axial deposition and the like.

Going further, the optical fiber **100** includes a core region **105** a cladding region **110,** a first coating layer **115** and a second coating layer **120.** The core region **105** is an inner part of the optical fiber **100.** Moreover, the core region **105** and the cladding region **110** are formed during the manufacturing stage of the optical fiber **100.** The core region **105** is defined by a region around a central longitudinal axis **125** of the optical fiber **100.** In general, the core region **105** is defined as the region around the central longitudinal axis **125** of the optical fiber **100** through which light transmits. Furthermore, the central longitudinal axis **125** is associated with the optical fiber **100.** In general, the central longitudinal axis **125** of the optical fiber **100** passes through a geometrical center of the optical fiber **100** and is parallel to a length of the optical fiber **100** (as shown in **FIG. 1B**). In addition, the central longitudinal axis **125** is mutually perpendicular to a cross-section of the optical fiber **100.** Moreover, the core region **105** is made of a plurality of materials. The plurality of materials includes germanium dioxide, silicon dioxide or silica, fluorine or combination thereof and the like.

Further, the cladding region **110** of the optical fiber **100** surrounds the core region **105** of the optical fiber **100.** In general, the cladding region **110** is defined as a region around the core region **105** which confines a light ray to travel within the core region **105** of the optical fiber **100.** In addition, the cladding region **110** confines the light ray in the core region **105** based on total internal reflection at a core-cladding interface. In general, total internal reflection in optical fiber **100** is a phenomena of complete reflection of the light ray reaching the core-cladding interface. Furthermore, the core region **105** has a refractive index which is greater than a refractive index of the cladding region **110.** In an embodiment of the present disclosure, the core region **105** has a higher refractive index than the cladding region **110.** In an embodiment of the present disclosure, the cladding region **110** of the optical fiber **100** has a diameter (A) in a range of 124 µm - 126 µm.

Going further, the optical fiber **100** includes the first coating layer **115** and the second coating layer **120.** The first coating layer **115** surrounds the cladding region **110** of the optical fiber **100.** In an embodiment of the present disclosure, the first coating layer **115** is an inner coating layer. In an embodiment of the present disclosure, the first coating layer **115** is in direct contact with the cladding region **110.** In another embodiment of the present disclosure, one or more adhesive layers are present between the first coating layer **115** and the cladding region **110.**

The first coating layer **115** serves as a cushion and protects the core region **105** during bending, cabling and spooling of the optical fiber **100.** In addition, the first coating layer **115** protects the core region **105** and preserves the ability of the optical fiber **100** to transmit signals. In an embodiment of the present disclosure, the first coating layer **115** is present between the cladding region **110** and the second coating layer **120.** Moreover, the first coating layer **115** has a first diameter (B). The first diameter (B) lies in the range of 200 µm - 300 µm.

Further, the first coating layer **115** is formed of a material having low Young's modulus. The first coating layer **115** is formed from a material selected from a group of acrylates and polyimides. In an embodiment of the present disclosure, the acrylate material used for manufacturing the first coating layer **115** is UV cured acrylate material. UV cured acrylate material are soft and have low Young's modulus. Furthermore, the second coating layer **120** surrounds the first coating layer **115.** In an embodiment of the present disclosure, the second coating layer **120** is an outer coating layer. In an embodiment of the present disclosure, the second coating layer **120** is in direct contact with the first coating layer **115.** In another embodiment of the present disclosure, the one or more adhesive layers are present between the second coating layer **120** and the first coating layer **115.** The second coating layer **120** protects the optical fiber **100** from environmental exposure, mechanical damages, chemical attacks and the like. In addition, the second coating layer **120** enables an easy deployment of optical fiber **100.**

The second coating layer **120** is formed of a material having high Young's modulus. In an embodiment of the present disclosure, the Young's modulus of the second coating layer **120** is higher than the Young's modulus of the first coating layer **115.** The second coating layer **120** is formed of polyimide material. In general, the polyimide material is thermally stable in nature. In addition, the polyimide materials have high chemical resistance and provide mechanical strength to the optical fiber **100.** Furthermore, the second coating material has a second diameter (C). The second diameter (C) lies in the range of 300 µm - 400 µm.

The combination of the first coating layer **115** and the second coating layer **120** maintains the optical performance of the optical fiber **100.** In addition, the combination of the first diameter (B) and the material of the first coating layer **115** and the second diameter (C) and the material of the second coating layer **120** provides strength greater than or equal to 5 Giga-Pascal (hereinafter "GPa"). Different material combinations of the first coating layer **115** and the second coating layer **120** may be formed to maintain the optical performance and strength of the optical fiber **100.** In an embodiment of the present disclosure, the first coating layer **115** is formed of UV cured acrylate material and the second coating layer **120** is formed of polyimide material. In another embodiment of the present disclosure, the first coating layer **115** and the second coating layer **120** each is formed of polyimide material. The polyimide material utilized for the first coating layer **115** has relatively low Young's modulus than the polyimide material utilized for the second coating layer **120.** Furthermore, the optical fiber **100** is compact in size.

Furthermore, different diameter combinations associated with the first coating layer **115** and the second coating layer **120** may be used to maintain the strength of the optical fiber **100** no less than 5 GPa. In an embodiment of the present disclosure, the strength of the optical fiber **100** is no less than 5 GPa when the first coating layer **115** has a diameter of 200 µm and the second coating layer **120** has the diameter of 300 µm. In another embodiment of the present disclosure, the strength of the optical fiber **100** is no less than 5 GPa when the first coating layer **115** has the diameter of 300 µm and the second coating layer **120** has the diameter of 400 µm. In yet another embodiment of the present disclosure, the strength of the optical fiber **100** is no less than 5 GPa when the first coating layer **115** has the diameter of 250 µm and the second coating layer **120** has the dosimeter of 350 µm.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. An optical fiber (100) comprising:
a core region (105) defined by a region around a central longitudinal axis (125) of the optical fiber (100);
a cladding region (110) surrounding the core region (105);
a first coating layer (115) surrounding the cladding region (110); and
a second coating layer (120) surrounding the first coating layer (115),
**characterized in that** the first coating layer (115) is formed from a material selected from a group of acrylates and polyimides, the first coating layer (115) has a first diameter in a range of 200 µm - 300 µm, the second coating layer (120) is formed of a polyimide material, the second coating layer (120) has a second diameter in a range of 300 µm - 400 µm and the range of diameter and type of material used for the first coating layer (115) and the second coating layer (120) provides strength greater than or equal to 5GPa to the optical fiber (100).

2. The optical fiber (100) as recited in claim 1, **characterized in that** the optical fiber (100) is a bend insensitive fiber.

3. The optical fiber (100) as recited in claim 1, **characterized in that** the optical fiber (100) meets the requirements of ITU-T G657 A2.

4. The optical fiber (100) as recited in claim 1, **characterized in that** the optical fiber (100) meets the requirements of ITU-T G657 B3.

5. The optical fiber (100) as recited in claim 1, **characterized in that** the optical fiber (100) complies with IEC 60794-2 standard.

6. The optical fiber (100) as recited in claim 1, **characterized in that** the cladding region (110) has a diameter in a range of 124 µm - 126 µm.

7. The optical fiber (100) as recited in claim 1, **characterized in that** the optical fiber (100) has a cladding non-circularity of less than equal to 1 %.

8. The optical fiber (100) as recited in claim 1, **characterized in that** the optical fiber (100) has a core concentricity error of less than equal to 0.5 µm.
